# EUROPEAN PATENT SPECIFICATION

(11) **EP 1 161 989 B1**
(45) Date of publication and mention of the grant of the patent: **01.08.2007**
(21) Application number: 01202144.0
(22) Date of filing: 01.06.2001
(51) Int. Cl.: B01J 19/00, B01L 3/00

(54) **Device for packaging a chip shaped carrier and process for assembling a plurality of such carriers**
Vorrichtung zum Verpacken eines chipförmigen Trägers und Montageverfahren für eine Vielzahl solcher Träger
Dispositif de conditionnement d'un substrat en forme de puce et procédé pour l'assemblage d'une pluralité de ces substrats

(30) Priority: 08.06.2000 EP 00810501
(43) Date of publication of application: 12.12.2001
(73) Proprietor: F.HOFFMANN-LA ROCHE AG, 4070 Basel (CH); Roche Diagnostics GmbH, 68305 Mannheim (DE)
(72) Inventor: Lehmann, Thomas, 6005 Luzern (CH); Vischer, Peter, 6403 Küssnacht am Rigi (CH)
(74) Representative: Ventocilla, Abraham

(56) References cited:
- WO-A-01/05504
- FR-A- 2 784 751
- US-A- 5 945 334
- PATENT ABSTRACTS OF JAPAN vol. 1998, no. 07, 31 March 1998 (1998-03-31) & JP 09 145583 A (DEV CENTER FOR BIOTECHNOL), 6 June 1997 (1997-06-06)

## Description

The present invention relates to a device for packaging a chip shaped carrier having an active surface which is adapted to be read by an electro-optical reading device.

The invention further relates to a process for assembling a plurality of such chip packaging devices.

The invention further relates to a system for carrying out evaluation and/or monitoring methods involving electro-optical reading of an active surface of a chip shaped carrier.

Within the context of the instant invention a chip shaped carrier is a substrate, in particular a glass chip of e.g. squared shape having a thickness of e.g. 0.7 or 1.0 millimeter and a so called active surface, which is a surface coated with an array of different snippets of DNA, e.g. DNA oligonucleotide probes, located at known positions on that surface. Those snippets of DNA serve as probes for detecting DNA fragments with a complementary DNA sequence.

Within the context of the instant invention a packaging device for packaging such a DNA chip is in particular a one-way cartridge made of a plastic material.

DNA chips contained in such cartridges have a wide range of applications. For example, they may be used for understanding the structure-activity relationship between different biological materials or determining the DNA-sequence of an unknown biological material. For instance, the DNA-sequence of such unknown material may be determined by, for example, a process known as sequencing by hybridization. In one method of sequencing by hybridization, a sequences of diverse materials are formed at known locations on a surface of a chip, and a solution containing one or more targets to be sequenced is applied to that surface. The targets will bind or hybridize with only complementary sequences on the substrate. The locations at which hybridization occurs are detected with appropriate detection systems by labeling the targets with a fluorescent dye, radioactive isotope, enzyme, or other marker. Information about target sequences can be extracted from the data obtained by such detection systems.

By combining various available technologies, such as photolithography and fabrication techniques, substantial progress has been made in the fabrication and placement of diverse materials on chips of the above mentioned kind. For example, thousands of different sequences may be fabricated on a single substrate of about 1.28 square centimeter in only a small fraction of the time required by conventional methods. Such improvements make these substrates practical for use in various applications, such as biomedical research, clinical diagnostics, and other industrial markets, as well as the emerging field of genomics, which focuses on determining the relationship between genetic sequences and human physiology.

As commercialization of such chips becomes widespread, an economically feasible and device and a method for packaging the chips with a high-throughput are desired.

Since the active coating of the chip, that is the surface thereof of which is coated with the above mentioned diverse sequences, has to be accessible e.g. to optical detection means, e.g. in the case of fluorescence measurements, the chip has to be inserted into the outer wall of a one-way cartridge, and its active coating faces the interior of the so-called process chamber within the cartridge.

For instance in the above mentioned method of sequencing by hybridization, processing of the active coating of the chip includes flooding of the process chamber of the cartridge with a solution containing one or more targets to be sequenced. Therefore, a liquid-tight connection between the chip and the one-way cartridge is necessary. In a known embodiment described in U.S. Patent Specification No. 5,945,334 this has been achieved under clean-room conditions by attaching the chip to a cavity of the cartridge by means of an adhesive, that is by gluing it into the cartridge. This known method for connecting the chip to the cartridge has two serious disadvantages. First, the fluorescence of the adhesives used is so high that it substantially interferes and perturbates fluorescence measurements performed on the active coating of the chips and can even have saturating effect on a photomultiplier used for performing the fluorescence measurements. A further disadvantage of the known method for connecting the chip to the cartridge is that it is performed manually and is not suitable for being performed by automated means.

A first aim of the invention is therefore to provide a device for packaging a chip of the above mentioned kind which does not have the above mentioned disadvantages and which provided a liquid-tight connection of such a chip to a cartridge, without using any adhesive substance, the structure of such a device being suitable for automated assembly thereof under clean-room conditions.

A second aim of the invention is to provide a process for assembling a plurality of chip packaging devices according to the invention with a high throughput.

A third aim of the invention is to provide a system for carrying out evaluation and/or monitoring methods involving electro-optical reading of an active surface of a chip shaped carrier without having the above mentioned disadvantages of prior art embodiments.

According to a first aspect of the invention the above mentioned first aim is attained with a device according to claim 1. Preferred embodiments of this device are defined by claims 2-10.

The main advantages of a chip packaging device according to the invention are due to the fact that the required liquid-tight connection of the chip to the cartridge is achieved without using any adhesive. These advantages are the absence of perturbating fluorescence related to the means used for making that connection and a longer useful lifetime of unused chips. In addition the coplanar arrangement of the chip and the means for establishing its liquid-tight connection to the cartridge provide improved flow conditions Within the process chamber of the cartridge. Moreover, the structure of a chip packaging device according to the invention is suitable for a fully automated, high throughput assembly thereof.

According to a second aspect of the invention the above mentioned second aim is attained with a process according to claim 11. Preferred embodiments of this process are defined by claims 12-17.

The main advantages of a process according to the invention for assembling a plurality of chip packaging devices having the structure proposed by the instant invention are that such a process can be entirely performed using standard automated means and with a high throughput.

According to a third aspect of the invention the above mentioned third aim is attained with a system according to claim 18. A preferred embodiment of this system is defined by claim 19.

The main advantage of a system according to the invention is that it makes possible to carry out evaluation and/or monitoring methods involving electro-optical readings of an active surface of a chip shaped carrier of the above mentioned type without the above mentioned drawbacks of prior art equipment.

Preferred embodiments of the invention are described hereinafter more in detail with reference to the accompanying drawings, wherein
- Fig. 1: shows a perspective view of a first embodiment of a chip packaging device 11 according to the invention comprising a cartridge 12,
- Fig. 2: shows a cross-sectional, exploded view of means used according to the invention for attaching a chip shaped carrier 21 to a first casing 14 which is part of cartridge 12 in Fig. 1,
- Fig. 3: shows a cross-sectional view of the means represented in Fig. 2 after they are assembled according to the invention,
- Fig. 4: shows a top view of the assembly represented in Fig. 3,
- Fig. 5: shows a schematic cross-sectional view of the assembly represented in Fig. 3 and of a second casing 15 which is part of cartridge 12 in Fig. 1,
- Fig. 6: shows a perspective view of a second embodiment of a chip packaging device 61 according to the invention comprising a cartridge 62,
- Fig. 7: shows a cross-sectional, exploded view of means used according to the invention for attaching a chip shaped carrier 21 to a first casing 64 which is part of cartridge 62 in Fig. 6,
- Fig. 8: shows a cross-sectional view of the means represented in Fig. 7 after they are assembled according to the invention,
- Fig. 9: shows a top view of the assembly represented in Fig. 7,
- Fig. 10: shows a schematic cross-sectional view of the assembly represented in Fig. 7 and of a second casing 65 which is part of cartridge 62 in Fig. 6,
- Fig. 11: shows an assembly line for automatically packaging chips in cartridges.

### FIRST EMBODIMENT OF A CHIP PACKAGING DEVICE ACCORDING TO THE INVENTION

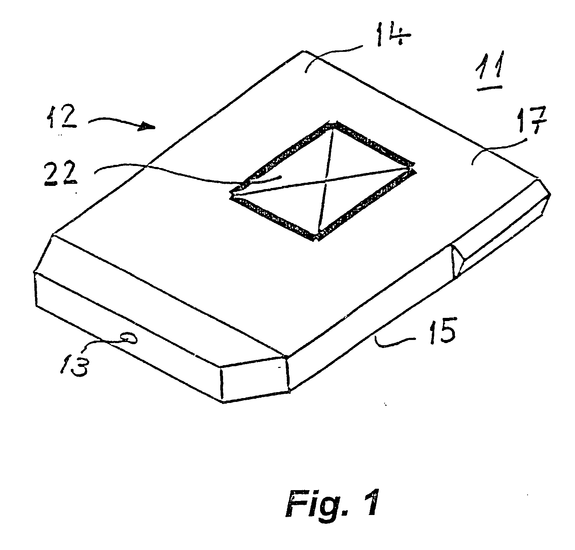

As shown by Fig. 1 a chip packaging device 11 according to the invention comprises a cartridge 12. Cartridge 12 comprises a first casing part 14 and a second casing part 15. Casing part 15 has an opening 13 for introducing a liquid sample into cartridge 12. Casing part 15 is preferably made of an optically non-transparent material.

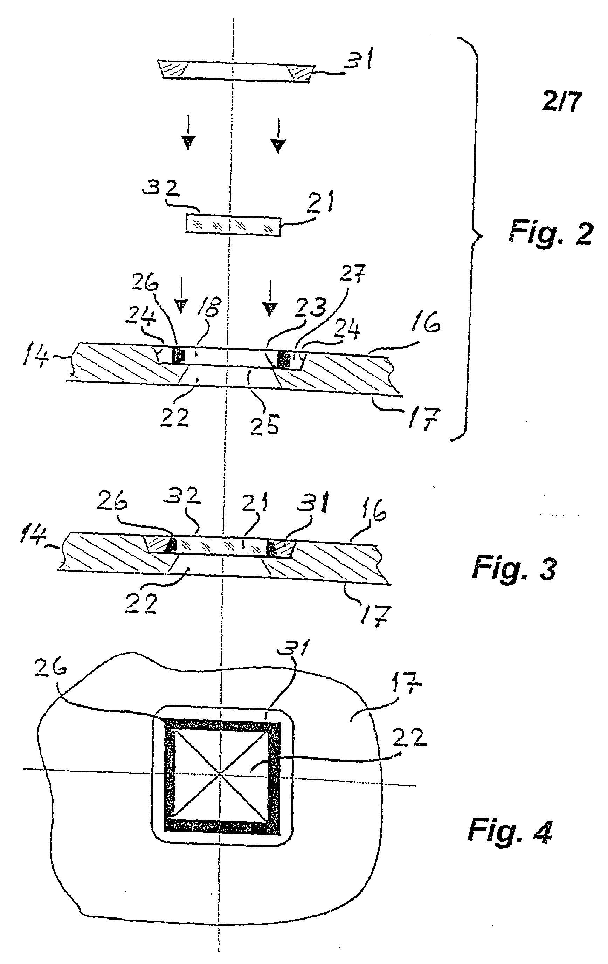

As can be appreciated from Fig. 2, casing part 14 has an inner surface 16 and outer surface 17, a first cavity 18 for receiving a chip shaped carrier 21 - called for simplicity chip 21 hereinafter- and a second cavity 22 which forms a window providing visual access to first cavity 18, and thereby to the active surface of chip shaped carrier 21. The just described structure is just one example of means which provide visual access to that active surface. Other means which are apt to provide such access and which do not necessarily require a second cavity 22 and/or use a casing part 15 made of an optically non-transparent material will however be apparent to those skilled in the art.

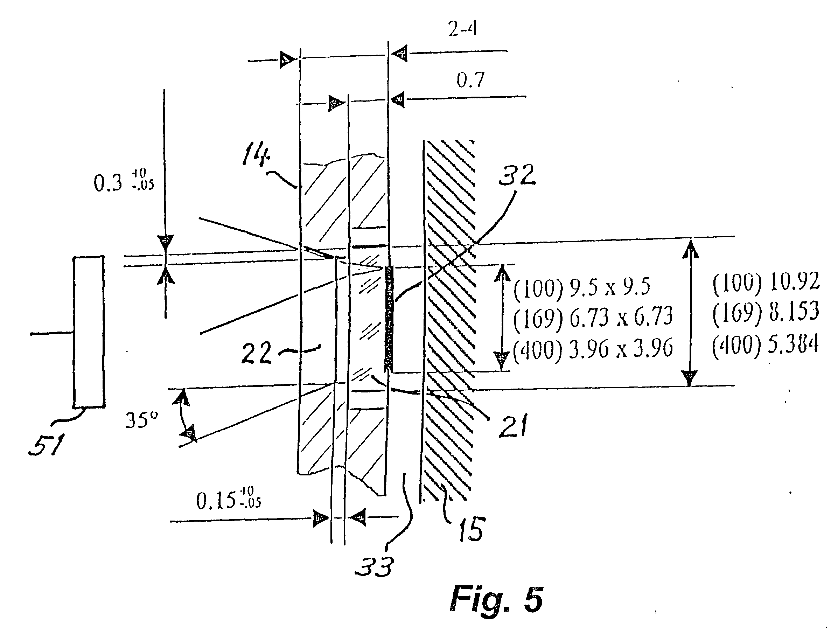

The shape of cavity 22 defines the numeric aperture available for emission of fluorescence light. This aperture defines the optical accessibility of the chip which has to be guaranteed for a reading out. In the embodiment represented in Fig. 5, cavity 22 provides an aperture of 35 degrees.

Chip 21 is e.g. made of glass, has a thickness of e.g. 0.7 or 1.0 millimeter, and has substantially the shape of a square. Since the size of chip 21 has a relatively high tolerance of e.g. 0.0762 millimeter, in the embodiment described hereinafter the space available in cavity 18 for receiving and positioning chip 21 has a corresponding joint clearance.

Chip 21 has an active surface which is covered by an array 32 of oligonucleotide probes and which must not be touched at all to avoid any damage of the active surface.

Cavity 18 has a flat or substantially flat bottom surface 23 and inclined side wall surfaces 24 which extend between inner surface 16 of casing 14 and bottom surface 23. Each of the inclined side wall surfaces 24 forms an obtuse angle with bottom surface 23. Bottom surface 23 has an opening 25 which opens into second cavity 22.

As can be appreciated in particular from Figures 2, 3 and 5 this first embodiment allows insertion of chip shaped carrier 21 into its position in cavity 18 from the inside of casing part 14 of cartridge 62.

A sealing frame 26, which is made of a compressible material, is part of casing 14 and is connected to bottom surface 23 of cavity 18. In a preferred embodiment, sealing frame 26 is formed onto bottom surface 23 by an injection molding process. In another embodiment sealing frame 26 is bound by adherence to bottom surface 23.

A chip packaging device according to the invention further includes a locking frame 31 represented in Fig. 2. The cross-section of locking frame 31 is wedge-shaped. In a preferred embodiment, locking frame 31 is apt to be bound to casing 14 by a welding process.

As can be appreciated from Figures 2 and 3, chip 21 is positioned in cavity 18 of casing part 14.

As can be appreciated from Figures 3 and 4, the shape and dimensions of cavity 18, chip 21, sealing frame 26, locking frame 31 and opening 25 of bottom surface 23 of cavity 18 are so chosen that chip 21 fits into the space delimited by sealing frame 26, and a gap 27 exists between sealing frame 26 and the inclined side wall surfaces 24 of first cavity 18, and locking frame 31 is larger than gap 27, but locking frame 31 is however insertable into gap 27 by a pressure exerted on locking frame 31 against casing 14. That pressure causes a compression of sealing frame 26 and a corresponding pressure on a substantial part of the outer surface of the lateral periphery of chip 21. The latter outer surface is in contact with sealing frame 26.

In a preferred embodiment, casing 14 and locking frame 31 are made of a first plastic material, e.g. a polypropylene, and sealing frame 26 is made of a second plastic material, e.g. a thermoplastic elastomer, which is softer than the first plastic material.

In a preferred embodiment part of which is schematically shown by Fig. 5, chip 21 has a first surface which is coated with a so called probe array 32, i.e. an array of diverse sequences, e.g. DNA oligonucleotides, located at known positions on that first surface, a second surface opposite to the first surface, and a third surface which extends between the first and second surfaces, is normal to these surfaces, and is the outer surface of the lateral periphery of chip 21.

Since the active coating 32 of chip 21, that is the surface thereof of which is coated with the above mentioned diverse sequences, has to be accessible e.g. to optical detection means 51, e.g. for performing fluorescence measurements, chip 21 is inserted into the outer wall of cartridge 12, and its active coating 32 faces the interior of a so-called process chamber 33 within cartridge 12.

As can be appreciated from Fig. 5, second cavity 22 forms a window which provides visual access to the active surface of chip shaped carrier 21. The just described structure is just one example of means which provide visual access to that active surface. Other means which are apt to provide such access and which do not necessarily require a cavity 22 and/or use a casing part 15 made of an optically non-transparent material will however be apparent to those skilled in the art.

The geometric specifications of mounting of chip 21 are represented in Fig. 5, where all dimensions are indicated in millimeters. As indicated therein, chip 21 can have three sizes designated by numbers 100, 169 and 400. Chip size 100 has a square side length of 10.92 millimeters. Chip size 169 has a square side length of 8.153 millimeters. Chip size 400 has a square side length of 5.384 millimeters. The active surface of chip size 100 has a square side length of 9.5 millimeters. The active surface of chip size 169 has a square side length of 6.73 millimeters. The active surface of chip size 400 has a square side length of 3.96 millimeters.

As can be appreciated from Fig. 5, the above described means for attaching chip 21 to casing part 14 make it possible to mount chip 21 so that it is coplanar with the side of casing 14 which faces processing chamber 33.

Since the chip is only held by friction forces, a minimum chip contact force of 5N has been defined to ensure proper operation, and in particular to ensure that the chip mounting remain liquid-tight up to an overpressure of 300 millibar.

### SECOND EMBODIMENT OF A CHIP PACKAGING DEVICE ACCORDING TO THE INVENTION

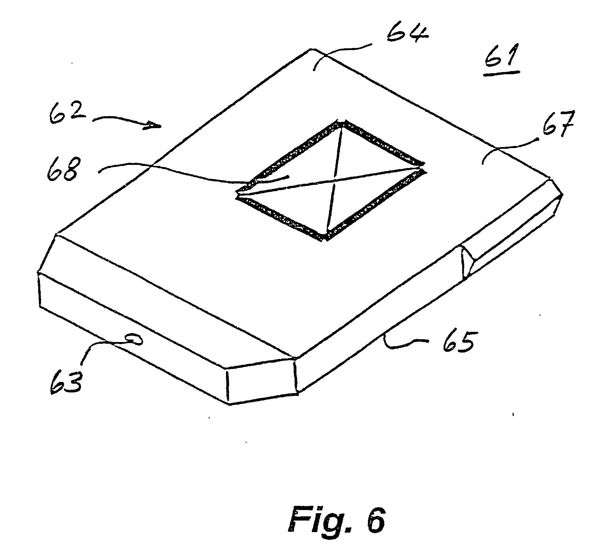

As shown by Fig. 6 a chip packaging device 61 according to the invention comprises a cartridge 62. Cartridge 62 comprises a first casing part 64 and a second casing part 65. Casing part 65 has an opening 63 for introducing a liquid sample into cartridge 62. Casing part 65 is preferably made of an optically non-transparent material.

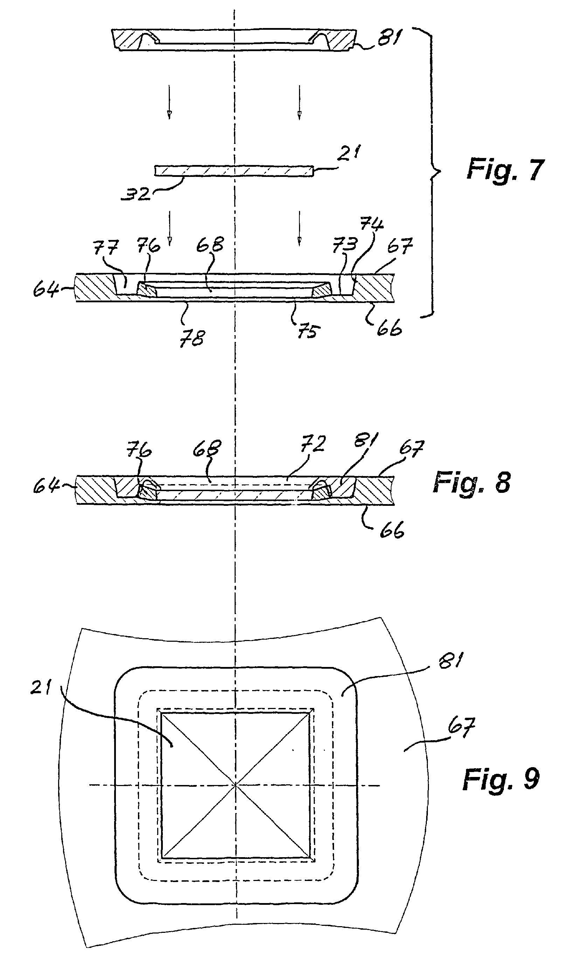

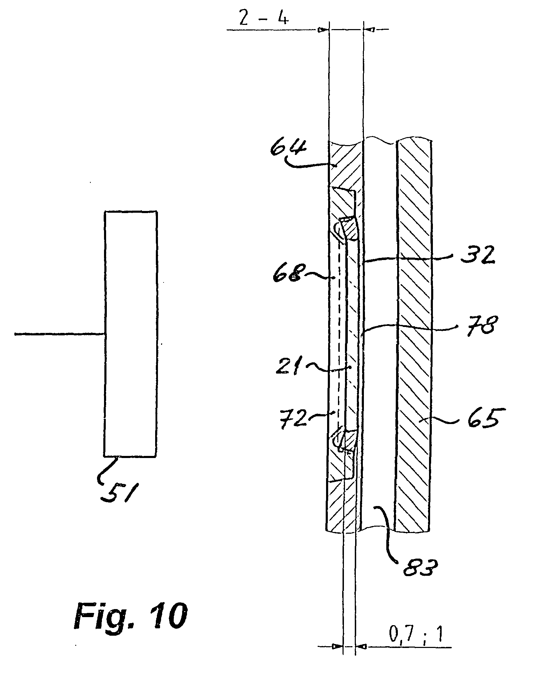

As can be appreciated from Fig. 7, casing part 64 has an inner surface 66 and outer surface 67, a first cavity 68 for receiving a chip shaped carrier 21 - called for simplicity chip 21 hereinafter- and a second cavity 78 which faces the interior of a so-called process chamber 83 within cartridge 62. Process chamber 83 is represented in Fig. 10.

The shape of cavity 72, which as shown in Fig. 8 and Fig. 10 lies between chip shaped carrier 21 and the plane defined by outer surface 67, defines the numeric aperture available for emission of fluorescence light. This aperture defines the optical accessibility of the chip which has to be guaranteed for a reading out.

Chip 21 is e.g. made of glass, has a thickness of e.g. 0.7 or 1.0 millimeter, and has substantially the shape of a square. Since the size of chip 21 has a relatively high tolerance of e.g. 0.0762 millimeter, in the embodiment described hereinafter the space available in cavity 68 for receiving and positioning chip 21 has a corresponding joint clearance.

Chip 21 has an active surface which is covered by an array 32 of oligonucleotide probes and which must not be touched at all to avoid any damage of the active surface.

Cavity 68 has a flat or substantially flat bottom surface 73 and inclined side wall surfaces 74 which extend between outer surface 67 of casing 64 and bottom surface 73. Each of the inclined side wall surfaces 74 forms an obtuse angle with bottom surface 73. Bottom surface 73 has an opening 75 which opens into second cavity 72.

As can be appreciated in particular from Figures 7, 8 and 19 this second embodiment offers the advantage that it allows insertion of chip shaped carrier 21 into its position in cavity 68 from the outside of cartridge 62. This is advantageous for an automatic assembling of chip packaging devices according to the invention.

A sealing frame 76, which is made of a compressible material, is part of casing 64 and is connected to bottom surface 73 of cavity 68. In a preferred embodiment, sealing frame 76 is formed onto bottom surface 73 by an injection molding process. In another embodiment sealing frame 76 is bound by adherence to bottom surface 73.

A chip packaging device according to the invention further includes a locking frame 81 represented in Fig. 7. The cross-section of locking frame 81 is wedge-shaped. In a preferred embodiment, locking frame 81 is apt to be bound to casing 64 by a welding process.

As can be appreciated from Figures 7 and 8, chip 21 is positioned in cavity 68 of casing part 64.

As can be appreciated from Figures 8 and 9, the shape and dimensions of cavity 68, chip 21, sealing frame 76, locking frame 81 and opening 75 of bottom surface 73 of cavity 68 are so chosen that chip 21 fits into the space delimited by sealing frame 76, and a gap 77 exists between sealing frame 76 and the inclined side wall surfaces 74 of first cavity 68, and locking frame 81 is larger than gap 77, but locking frame 81 is however insertable into gap 77 by a pressure exerted on locking frame 81 against casing 64. That pressure causes a compression of sealing frame 76 and a corresponding pressure on a substantial part of the outer surface of the lateral periphery of chip 21. The latter outer surface is in contact with sealing frame 76.

In a preferred embodiment, casing 64 and locking frame 81 are made of a first plastic material, e.g. a polypropylene, and sealing frame 76 is made of a second plastic material, e.g. a thermoplastic elastomer, which is softer than the first plastic material.

In a preferred embodiment part of which is schematically shown by Fig. 10, chip 21 has a first surface which is coated with a so called probe array 32, i.e. an array of diverse sequences, e.g. DNA oligonucleotides, located at known positions on that first surface, a second surface opposite to the first surface, and a third surface which extends between the first and second surfaces, is normal to these surfaces, and is the outer surface of the lateral periphery of chip 21.

Since the active coating 32 of chip 21, that is the surface thereof of which is coated with the above mentioned diverse sequences, has to be accessible e.g. to optical detection means 51, e.g. for performing fluorescence measurements, chip 21 is inserted into the outer wall of cartridge 62, and its active coating 32 faces the interior of process chamber 83 within cartridge 62.

As can be appreciated from Fig. 10, cavity 72 forms a window which provides visual access to the active surface of chip shaped carrier 21. The just described structure is just one example of means which provide visual access to that active surface. Other means which are apt to provide such access and which do not necessarily require a cavity 72 and/or use a casing part 65 made of an optically non-transparent material will however be apparent to those skilled in the art.

The geometric specifications of mounting of chip 21 are similar to those represented in and described with reference to Fig. 5.

As can be appreciated from Fig. 10, the above described means for attaching chip 21 to casing part 64 make it possible to mount chip 21 so that it is nearly coplanar with the side of casing 64 which faces processing chamber 83.

Since the chip is only held by friction forces, a minimum chip contact force of 5N has been defined to ensure proper operation, and in particular to ensure that the chip mounting remain liquid-tight up to an overpressure of 300 millibar.

A further aspect of the invention relates to a process for an automated assembling a plurality of chip packaging devices according to the invention.

### EXAMPLE OF AN ASSEMBLY LINE FOR AUTOMATED ASSEMBLING OF A PLURALITY OF CHIP PACKAGING DEVICES ACCORDING TO THE INVENTION

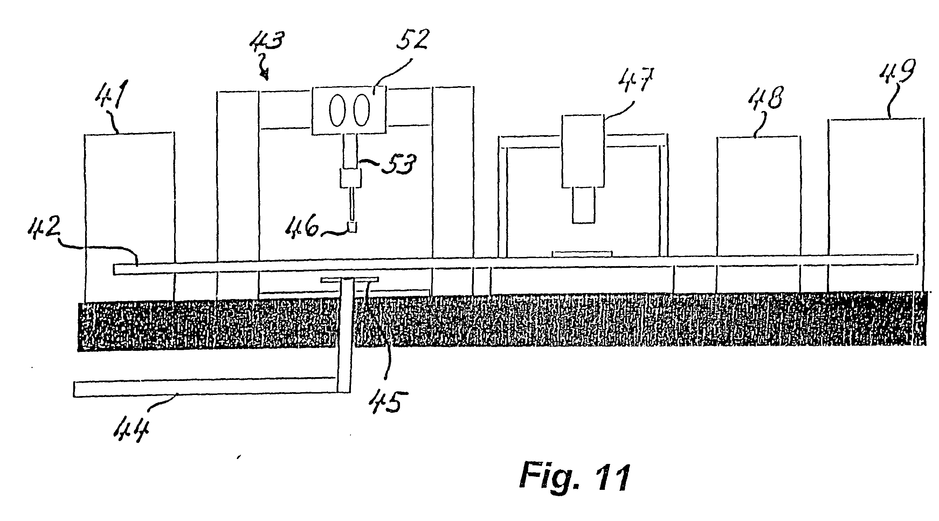

Fig. 11 schematically shows the structure of an completely automatic assembly line for carrying out such a process. This assembly line comprises a stock 41 of casing parts 14, 15 of cartridges 12 (described above with reference to Figures 1-5) or of casing parts 64, 65 of cartridges 62 (described above with reference to Figures 6-10), a first conveyor 42, a die bonder 43, a second conveyor 44 for conveying blue tapes which come from a diamond saw cutting machine and which carry a plurality of chip shaped carriers 21, an ultrasonic welding machine 47, an automatic packing apparatus 48, and a stack of completely assembled chip packaging devices 49. Assembly line components 42 to 48 are all standard apparatuses and devices suitable for automated operation. Die bonder 43 comprises a blue tape support 45 having an expansion mechanism, a working frame 52 movable in x- and y-direction and a tool holder 53 which holds a die collect 46. Tool holder 53 is connected to working frame 52 and is thereby movable in x- and y-direction. Tool holder 53 has a spindle which enables to move die collect 46 in z-direction.

### FIRST EXAMPLE OF A PROCESS FOR ASSEMBLING A PLURALITY OF CHIP PACKAGING DEVICES ACCORDING TO THE INVENTION

According to the invention a process for assembling a plurality of chip packaging devices 11 described above with reference to Figures 1 to 5 comprises the following steps:
(a) providing to an input side of the automatic assembly line shown by Fig. 11 a plurality of casings 14 and a plurality of locking frames 31, each of casings 14 comprising a sealing frame 26 which is formed thereon e.g. by an injection molding process,
(b) providing a plurality of chip shaped carriers 21 each of which has an active surface 32 to the assembly line,
(c) positioning each of carriers 21 within a sealing frame 26 of one of the casing parts 14 by means of automatic die bonder 43,
(d) inserting each of locking frames 31 into gap 27 between the sealing frame 26 and the inclined side wall surfaces 24 of a cavity 18 of the casing part 14 by pressing it against that casing part 14 until the bottom outer surface of locking frame 31 contacts bottom surface 23 of that cavity 18, the latter inserting and pressing being effected by an automatic apparatus, e.g. by ultrasonic welding machine 47,and
(e) bonding each of the inserted locking frames 31 onto the bottom surface 23 of the first cavity 18 of the casing part 14.

In the above mentioned process steps (a) and (b) casings 14 and a locking frames 31 are preferably transferred one-by-one via first conveyor 42 from stock of parts 41 to die bonder 43 and from there successively to the other parts of the assembly line where a processing step has to be carried out. In a similar way and with a proper timing chip shaped carriers 21 are also transferred one-by-one via second conveyor 44 and blue tape support 45 to die bonder 43.

In all above mentioned process steps, the active surface of chip 21 is not touched at all, and this ensures that no damage of that active surface can take place during the assembling process. In addition, the above defined process ensures that the quality of the cutting of chip 21 remains basically unchanged.

In a preferred embodiment, each locking frame 31 is bond onto one of casing parts 14 by a welding process, and preferably by an ultrasonic welding process.

In a further preferred embodiment, at least the following of the above mentioned assembling steps are carried out in a clean room:
positioning each of the carriers 21 within one of the sealing frames 26,
inserting each of the locking frames 31 into one of the gaps 27, and
welding each of the locking frames 31 onto one of the casings 14.

After bonding of a locking frame 31 to a casing part 14, this casing part and a complementary casing part 15 are provided to an automatic packaging apparatus 48, where both casing parts 14 and 15 are put together to form a complete chip packaging device 11, that is a cartridge 12 containing a chip shaped carrier 21.

An outstanding advantage of the device and the assembling process according to the invention is that they allow adjustment of the lateral insertion clearance when inserting the chip in cavity 18 of casing part 14. This adjustment possibility eliminates on the one hand the need for a highly accurate positioning of chip 21 in its mounting and the need for relatively large forces for effecting that mounting, and on the other hand allows the use of commercially available standard appliances used for the automated manufacture of integrated circuits.

An example of such a standard appliance is e.g. a die bonder which can supply a maximum joining force of 10 Newton. A die bonder is typically used for bonding an electronic silicon chip on a so-called lead frame. Afterwards, the copper lead frame and the silicon chip are electrically connected by means of gold wires. In the above described assembling process such a die bonder is used in a first step for inserting the chips 21 into cavity 18 of casing part 14 of cartridge 12. In a second step, locking frame 31 is welded in ultrasonic welding machine 47 to casing part 14.

The advantage of such an automated assembly line is that it makes possible to use a mounting machine suitable for use in a clean-room, namely the die bonder, in which the removal of chip 21 from a so-called "blue tape" is already integrated. The minimization of the joining force used for bonding chip 21 and casing part 14 is supported by a vision system.

An essential feature of a chip packaging device according to the invention and the process according to the invention for assembling such a device is that chip 21 is held in its position within cavity 18 exclusively by lateral forces applied on the peripheral surface of chip 21 which is in contact with sealing frame 26.

### SECOND EXAMPLE OF A PROCESS FOR ASSEMBLING A PLURALITY OF CHIP PACKAGING DEVICES ACCORDING TO THE INVENTION

According to the invention a process for assembling a plurality of chip packaging devices 61 described above with reference to Figures 6 to 10 comprises the following steps:
(a) providing to an input side of the automatic assembly line shown by Fig. 11 a plurality of casings 64 and a plurality of locking frames 81, each of casings 64 comprising a sealing frame 76 which is formed thereon e.g. by an injection molding process,
(b) providing a plurality of chip shaped carriers 21 each of which has an active surface 32 to the assembly line,
(c) positioning each of carriers 21 within a sealing frame 76 of one of the casing parts 64 by means of automatic die bonder 43,
(d) inserting each of locking frames 81 into gap 77 between the sealing frame 76 and the inclined side wall surfaces 74 of a cavity 68 of the casing part 64 by pressing it against that casing part 64 until the bottom outer surface of locking frame 81 contacts bottom surface 73 of that cavity 68, the latter inserting and pressing being effected by an automatic apparatus, e.g. by ultrasonic welding machine 47,and
(e) bonding each of the inserted locking frames 81 onto the bottom surface 73 of the first cavity 68 of the casing part 64.

In the above mentioned process steps (a) and (b) casings 64 and a locking frames 81 are preferably transferred one-by-one via first conveyor 42 from stock of parts 41 to die bonder 43 and from there successively to the other parts of the assembly line where a processing step has to be carried out. In a similar way and with a proper timing chip shaped carriers 21 are also transferred one-by-one via second conveyor 44 and blue tape support 45 to die bonder 43.

In all above mentioned process steps, the active surface of chip 21 is not touched at all, and this ensures that no damage of that active surface can take place during the assembling process. In addition, the above defined process ensures that the quality of the cutting of chip 21 remains basically unchanged.

In a preferred embodiment, each locking frame 81 is bond onto one of casing parts 64 by a welding process, and preferably by an ultrasonic welding process.

In a further preferred embodiment, at least the following of the above mentioned assembling steps are carried out in a clean room:
positioning each of the carriers 21 within one of the sealing frames 76,
inserting each of the locking frames 81 into one of the gaps 77, and
welding each of the locking frames 81 onto one of the casings 64.

After bonding of a locking frame 81 to a casing part 64, this casing part and a complementary casing part 65 are provided to an automatic packaging apparatus 48, where both casing parts 64 and 65 are put together to form a complete chip packaging device 61, that is a cartridge 62 containing a chip shaped carrier 21.

An outstanding advantage of the device and the assembling process according to the invention is that they allow adjustment of the lateral insertion clearance when inserting the chip in cavity 68 of casing part 64. This adjustment possibility eliminates on the one hand the need for a highly accurate positioning of chip 21 in its mounting and the need for relatively large forces for effecting that mounting, and on the other hand allows the use of commercially available standard appliances used for the automated manufacture of integrated circuits.

An example of such a standard appliance is e.g. a die bonder which can supply a maximum joining force of 10 Newton. A die bonder is typically used for bonding an electronic silicon chip on a so-called lead frame. Afterwards, the copper lead frame and the silicon chip are electrically connected by means of gold wires. In the above described assembling process such a die bonder is used in a first step for inserting the chips 21 into cavity 68 of casing part 64 of cartridge 62. In a second step, locking frame 81 is welded in ultrasonic welding machine 47 to casing part 64.

The advantage of such an automated assembly line is that it makes possible to use a mounting machine suitable for use in a clean-room, namely the die bonder, in which the removal of chip 21 from a so-called "blue tape" is already integrated. The minimization of the joining force used for bonding chip 21 and casing part 64 is supported by a vision system.

An essential feature of a chip packaging device according to the invention and the process according to the invention for assembling such a device is that chip 21 is held in its position within cavity 68 exclusively by lateral forces applied on the peripheral surface of chip 21 which is in contact with sealing frame 76.

### FIRST EXAMPLE OF A SYSTEM ACCORDING TO THE INVENTION FOR CARRYING OUT EVALUATION AND/OR MONITORING METHODS INVOLVING ELECTRO-OPTICAL READING OF AN ACTIVE SURFACE OF A CHIP SHAPED CARRIER

Such a system comprises a chip packaging device as described above with reference to Figures 1 to 5 and is useful for carrying out evaluation and/or monitoring methods involving electro-optical reading of an active surface of a chip shaped carrier. According to the invention such a system comprises
(a) a cartridge 12 having an opening 13 for introducing a liquid sample into the cartridge 12, the cartridge 12 comprising a casing part 14,
(b) casing part 14 has an inner surface 16 and outer surface 17, a first cavity 18 for receiving a chip shaped carrier 21, and means 22 which provide visual access to first cavity 18, and thereby to the active surface of chip shaped carrier 21,
   first cavity 18 has a bottom surface 23 and inclined side wall surfaces 24 which extend between the inner surface 16 of the casing part 14 and the bottom surface 23 and which form an obtuse angle with that bottom surface 23,
(c) a sealing frame 26 which is part of casing part 14 and which is made of a compressible material, sealing frame 26 is connected to bottom surface 23 of first cavity 18,
(d) a locking frame 31,
(e) the shape and dimensions of first cavity 18, chip shaped carrier 21, sealing frame 26, and locking frame 31 are such that
   (e.1) chip shaped carrier 21 fits into the space delimited by the sealing frame 26, and a gap 27 exists between the sealing frame 26 and the inclined side wall surfaces 24 of first cavity 18,
   (e.2) locking frame 31 is larger than gap 27, locking frame 31 is however insertable into gap 27 by pressure exerted on locking frame 31 against casing part 14, that pressure causing a compression of sealing frame 26 and a corresponding pressure on a substantial part of the outer surface of the lateral periphery of chip shaped carrier 21, that outer surface being in contact with sealing frame 26, and
(f) a chip shaped carrier 21 having an active surface which is adapted to be read by an electro-optical reading device, and chip shaped carrier is positioned in first cavity 18 of casing part 14.

In a preferred embodiment the above described system further comprises electro-optically reading means 51, schematically represented in Fig. 5, for reading the active surface 32 of chip shaped carrier 21. Electro-optically reading means 51 can be e.g. a fluorometer, that is an apparatus comprising a light source for irradiating active surface 32 with an excitation beam, light detection means for detecting fluorescent light emitted e.g. by a probe array forming part of active surface and providing a corresponding output signal, 32 and means for evaluating and/or monitoring that output signal.

### SECOND EXAMPLE OF A SYSTEM ACCORDING TO THE INVENTION FOR CARRYING OUT EVALUATION AND/OR MONITORING METHODS INVOLVING ELECTRO-OPTICAL READING OF AN ACTIVE SURFACE OF A CHIP SHAPED CARRIER

Such a system comprises a chip packaging device as described above with reference to Figures 6 to 10 and is useful for carrying out evaluation and/or monitoring methods involving electro-optical reading of an active surface of a chip shaped carrier. According to the invention such a system comprises
(a) a cartridge 62 having an opening 63 for introducing a liquid sample into the cartridge 62, the cartridge 62 comprising a casing part 64,
(b) casing part 64 has an inner surface 66 and outer surface 67, a first cavity 68 for receiving a chip shaped carrier 21, and means 72 which provide visual access to first cavity 68, and thereby to the active surface of chip shaped carrier 21,
   first cavity 68 has a bottom surface 73 and inclined side wall surfaces 74 which extend between the inner surface 66 of the casing part 64 and the bottom surface 73 and which form an obtuse angle with that bottom surface 73,
(c) a sealing frame 76 which is part of casing part 64 and which is made of a compressible material, sealing frame 76 is connected to bottom surface 73 of first cavity 68,
(d) a locking frame 81,
(e) the shape and dimensions of first cavity 68, chip shaped carrier 21, sealing frame 76, and locking frame 81 are such that
   (e.1) chip shaped carrier 21 fits into the space delimited by the sealing frame 76, and a gap 77 exists between the sealing frame 76 and the inclined side wall surfaces 74 of first cavity 68,
   (e.2) locking frame 81 is larger than gap 77, locking frame 81 is however insertable into gap 77 by pressure exerted on locking frame 81 against casing part 64, that pressure causing a compression of sealing frame 76 and a corresponding pressure on a substantial part of the outer surface of the lateral periphery of chip shaped carrier 21, that outer surface being in contact with sealing frame 76, and
(f) a chip shaped carrier 21 having an active surface which is adapted to be read by an electro-optical reading device, and chip shaped carrier is positioned in first cavity 68 of casing part 64.

In a preferred embodiment the above described system further comprises electro-optically reading means 51, schematically represented in Fig. 10, for reading the active surface 32 of chip shaped carrier 21. Electro-optically reading means 51 can be e.g. a fluorometer, that is an apparatus comprising a light source for irradiating active surface 32 with an excitation beam, light detection means for detecting fluorescent light emitted e.g. by a probe array forming part of active surface and providing a corresponding output signal, 32 and means for evaluating and/or monitoring that output signal.

Modifications and alternative embodiments of the invention will be apparent to those skilled in the art in view of the foregoing description. Accordingly, this description is to be construed as illustrative only and is for the purpose of teaching those skilled in the art the best mode of carrying out the invention. Details of the apparatus may be varied without departing from the scope of the appended claims.

### List of reference numbers

- 11: chip packaging device
- 12: cartridge
- 13: opening of cartridge
- 14: first casing part
- 15: second casing part
- 16: inner surface of casing 14
- 17: outer surface of casing 14
- 18: first cavity of casing 14
- 21: chip shaped carrier
- 22: second cavity of casing 14
- 23: bottom surface of first cavity 18 of casing 14
- 24: inclined side wall surfaces of first cavity 18
- 25: opening of bottom surface 23
- 26: sealing frame
- 27: gap

- 31: locking frame
- 32: probe array on a first surface of chip shaped carrier 21
- 33: processing chamber

- 41: stock of empty parts
- 42: first conveyor
- 43: die-bonder
- 44: second conveyor
- 45: blue tape support
- 46: die collect
- 47: welding machine
- 48: packing apparatus
- 49: stack

- 51: electro-optical reading means
- 52: working frame
- 53: tool holder

- 61: chip packaging device
- 62: cartridge
- 63: opening of cartridge
- 64: first casing part
- 65: second casing part
- 66: inner surface of casing 64
- 67: outer surface of casing 64
- 68: first cavity of casing 64
- 72: cavity of casing 64
- 73: bottom surface of first cavity 68 of casing 64
- 74: inclined side wall surfaces of first cavity 68
- 75: opening of bottom surface 73
- 76: sealing frame
- 77: gap
- 78: second cavity of casing 64
- 81: locking frame
- 83: processing chamber

## Claims

1. A device for packaging a chip shaped carrier having an active surface which is adapted to be read by an electro-optical reading device, said packaging device comprising
(a) a cartridge (62) having a processing chamber (83) and an opening (63) for introducing a liquid sample into said processing chamber (83), said cartridge (62) comprising a casing part (64),
(b) said casing part (64) having an inner surface (66) which faces said processing chamber (83) and outer surface (67), a first cavity (68) for receiving a chip shaped carrier (21), and means (72) which provide visual access to said first cavity (68), and thereby to said active surface of said chip shaped carrier (21),
said first cavity (68) having a bottom surface (73) and inclined side wall surfaces (74) which form an obtuse angle with that bottom surface (73), and which extend between said outer surface (67) of said casing part (64) and said bottom surface (73),
(c) a sealing frame (76) which is part of said casing part (64) and which is made of a compressible material, said sealing frame (76) being connected to said bottom surface (73) of said first cavity (68), and
(d) a locking frame (81),
(e) the shape and dimensions of said first cavity (68), said chip shaped carrier (21), said sealing frame (76), and said locking frame (81),being such that
(e.1) said chip shaped carrier (21) fits into the space delimited by said sealing frame (76), and that a gap (77),exists between said sealing frame (76) and the inclined side wall surfaces (74)of said first cavity (68),
(e.2) said locking frame (81), is larger than said gap (77), said locking frame (81) is however insertable into said gap (77), by pressure exerted on said locking frame (81) against said casing part (64), said pressure causing a compression of said sealing frame (76) and a corresponding pressure on a substantial part of the outer surface of the lateral periphery of said chip shaped carrier (21), said outer surface of said chip shaped carrier (21) being in contact with said sealing frame (76).

2. The chip packaging device according to claim 1, wherein said casing part (14, 64) and said locking frame (31, 81) are made of a first plastic material, and said sealing frame (26, 76) is made of a second plastic material, said second plastic material being softer than said first plastic material.

3. The chip packaging device according to claim 2, wherein said first plastic material is a polypropylene and said second plastic material is a thermoplastic elastomer.

4. The chip packaging device according to any of the preceding claims 1 to 3, wherein said locking frame (31, 81) is apt to be bound to said casing part (14, 64) by a welding process.

5. The chip packaging device according to any of the preceding claims 1 to 4, wherein the cross-section of said locking frame (31, 81) is wedge-shaped.

6. The chip packaging device according to any of the preceding claims 1 to 5, wherein said sealing frame (26, 76) is formed onto said bottom surface (23, 73) by an injection molding process.

7. The chip packaging device according to any of the preceding claims 1 to 6, wherein said sealing frame (26, 76) is bound by adherence to said bottom surface (23, 73) .

8. The chip packaging device according to any of the preceding claims 1 to 7wherein said chip shaped carrier (21) is made of glass and has a surface having substantially the shape of a square.

9. The chip packaging device according to any of the preceding claims 1 to 8, wherein said chip shaped carrier (21) has a first surface comprising a probe array (32), a second surface opposite to said first surface, and a third surface which extends between said first and second surfaces, is normal to these surfaces, and is the outer surface of the lateral periphery of said carrier (21), said carrier (21) being positioned in said first cavity (18, 68) of said casing part (14, 64) such that said probe array faces said processing chamber..

10. The chip packaging device according to any of the preceding claims 1 to 9, wherein said means (22, 72) which provide visual access to said first cavity (18, 68) comprise a second cavity (22, 72) which forms a window adapted to provide said visual access, said second cavity (22, 72) being formed in said outer surface (17, 67) of said casing part (14, 64).

11. A process for assembling a plurality of chip packaging devices according to any of claims 1 to 10 comprising
(a) providing a plurality of casing parts (14, 64) and a plurality of said locking frames (31, 81) to an automated assembly line, each of said casing parts (14, 64) comprising a sealing frame (26, 76),
(b) providing a plurality of chip shaped carriers (21) having each an active surface (32) to said assembly line,
(c) positioning each of said chip shaped carriers (21) within said sealing frame (26, 76) of one of said casing parts (14, 64) by means of a first automatic apparatus (43),
(d) inserting each of said locking frames (31, 81) into said gap (27, 77) between said sealing frame (26, 76) and said inclined side wall surfaces (24, 74) of said first cavity (18, 68) of said casing part (14, 64) by pressing said locking frame (31, 81) against said casing part (14, 64) until the bottom outer surface of said locking frame (31, 81) contacts a bottom surface (23, 73)of said first cavity (18, 68), the latter inserting and pressing being effected by a second automatic apparatus (47), and
(e) bonding each of said locking frames (31, 81) onto said bottom surface (23, 73) of said first cavity (18, 68) of said casing part (14, 64).

12. The process according to claim 11, wherein each of said locking frames (31, 81) is bond onto one of said casing parts (14, 64) by a welding process.

13. The process according to claim 11, wherein each of said casing parts (14, 64) is manufactured by a first injection molding process with a first plastic material, and said bounding of each of said sealing frames (26, 76) to a corresponding casing part (14, 64) is effected by a second injection molding process with a second plastic material.

14. The process according to claim 13, wherein said second plastic material is softer than said first plastic material.

15. The process according to claim 11, wherein said welding process for bonding said inserted locking frame (31, 81) onto said casing part (14, 64) is an ultrasonic welding process.

16. The process according to claim 11, wherein all assembling steps defined therein are fully automated using known, commercially obtainable equipment.

17. The process according to claim 16, wherein the following steps are carried out in a clean room:
positioning each of said carriers (21) within one of said sealing frames (26, 76),
inserting each of said locking frames (31, 81) into one of said gaps (27, 77), and
welding each of said locking frames (31, 81) onto one of said casing parts (14, 64).

18. A system for carrying out evaluation and/or monitoring methods involving electro-optical reading of an active surface of a chip shaped carrier, said system comprising
(a) a packaging device according to any of claims 1-10, and
(b) a chip shaped carrier (21) having an active surface which is adapted to be read by an electro-optical reading device, said chip shaped carrier (21) being positioned in said first cavity (68, 18) of said casing part (64, 14) of said packaging device.

19. A system according to claim 18, said system further comprising means (51) for electro-optically reading said active surface of said chip shaped carrier (21).

## Patentansprüche

1. Vorrichtung zum Verpacken eines chip-förmigen Trägers mit einer aktiven Oberfläche, die dazu ausgebildet ist, um von einem elektro-optischen Lesegerät ausgelesen zu werden, wobei die Verpackungsvorrichtung umfasst:
(a) eine Kassette (62) mit einer Verarbeitungskammer (83) und einer Öffnung (63) zum Einbringen einer Flüssigkeitsprobe in die Verarbeitungskammer (83), wobei die Kassette (62) ein Gehäuseteil (64) umfasst,
(b) das Gehäuseteil (64) mit einer Innenfläche (66), die in der Verarbeitungskammer (83) und einer Außenfläche (67) gegenüber liegt, mit einem ersten Hohlraum (68) zur Aufnahme eines chip-förmigen Trägers (21) und mit Mitteln (72), die eine visuelle Einsicht in den ersten Hohlraum (68) schaffen und **dadurch** zu der aktiven Oberfläche des chip-förmigen Trägers (21),
wobei der erste Hohlraum (68) eine Bodenfläche (73) und geneigte Seitenflächen (74) hat, die einen stumpfen Winkel mit der Bodenfläche (73) bilden und die sich zwischen der Außenfläche (67) des Gehäuseteils (64) und der Bodenfläche (73) erstrecken,
(c) einen Dichtungsrahmen (76), der Teil des Gehäuseteils (64) ist und der aus einem kompressiblen Material hergestellt ist, wobei der Dichtungsrahmen (76) mit der Bodenfläche (73) des ersten Hohlraums (68) verbunden ist und,
(d) einen Befestigungsrahmen (81),
(e) die Form und Abmessungen des ersten Hohlraums (68), des chip-förmigen Trägers (21), des Dichtungsrahmens (76) und des Befestigungsrahmens (81) derart sind, dass
(e.1) der chip-förmige Träger (21) in den von dem Dichtungsrahmen (76) begrenzten Raum hineinpaßt und dass ein Spalt (77) zwischen dem Dichtungsrahmen (76) und den geneigten Seitenflächen (74) des ersten Hohlraums (68) besteht,
(e.2) der Befestigungsrahmen (81) größer ist als der Spalt (77), wobei der Befestigungsrahmen (81) dennoch in den Spalt (77) einsetzbar ist durch auf den Befestigungsrahmen (81) ausgeübten Druck gegen das Gehäuseteil (64), wobei der Druck eine Kompression des Dichtungsrahmens (76) und einen korrespondierenden Druck auf einen wesentlichen Teil der Außenfläche des seitlichen Rands des chip-förmigen Trägers (21) hervorruft, wobei die Außenfläche des chip-förmigen Trägers (21) in Kontakt mit dem Dichtungsrahmen (76) ist.

2. Chip-Verpackungsvorrichtung nach Anspruch 1, **dadurch gekennzeichnet, dass** das Gehäuseteil (14,64) und der Befestigungsrahmen (31,81) aus einem ersten Kunststoffmaterial hergestellt sind und der Dichtungsrahmen (26,76) aus einem zweiten Kunststoffmaterial hergestellt ist, wobei das zweite Kunststoffmaterial weicher ist als das erste Kunststoffmaterial.

3. Chip-Verpackungsvorrichtung nach Anspruch 2, **dadurch gekennzeichnet, dass** das erste Kunststoffmaterial ein Polypropylen und das zweite Kunststoffmaterial ein thermoplastischer Elastomer sind.

4. Chip-Verpackungsvorrichtung nach einem der vorhergehenden Ansprüche 1 bis 3, **dadurch gekennzeichnet, dass** der Befestigungsrahmen (31,81) ausgebildet und geeignet ist, um mit dem Gehäuseteil (14,64) durch einen Schweißprozeß verbunden zu werden.

5. Chip-Verpackungsvorrichtung nach einem der vorhergehenden Ansprüche 1 bis 4, **dadurch gekennzeichnet, dass** der Querschnitt des Befestigungsrahmens (31,81) keilförmig ist.

6. Chip-Verpackungsvorrichtung nach einem der vorhergehenden Ansprüche 1 bis 5, **dadurch gekennzeichnet, dass** der Dichtungsrahmen (26,76) an die Bodenflächen (23,73) durch ein Spritzgießverfahren angeformt ist.

7. Chip-Verpackungsvorrichtung nach einem der vorhergehenden Ansprüche 1 bis 6, **dadurch gekennzeichnet, dass** der Dichtungsrahmen (26,76) durch Klebkraft mit der Bodenfläche (23,73) verbunden ist.

8. Chip-Verpackungsvorrichtung nach einem der vorhergehenden Ansprüche 1 bis 7, **dadurch gekennzeichnet, dass** der chip-förmige Träger (21) aus Glas hergestellt ist und eine im Wesentlichen quadratisch geformte Oberfläche hat.

9. Chip-Verpackungsvorrichtung nach einem der vorhergehenden 1 bis 8, **dadurch gekennzeichnet, dass** der chip-förmige Träger (21) eine erste Fläche, die ein Sonden-Array (32) umfasst, eine zweite Fläche gegenüber der ersten Fläche und eine dritte Fläche hat, die sich zwischen der ersten und der zweiten Fläche erstreckt und senkrecht zu diesen Flächen ist und die Außenfläche des seitlichen Rands des Trägers (21) ist, wobei der Träger (21) in dem ersten Hohlraum (18,68) des Gehäuseteils (14,64) derart positioniert ist, dass das Sonden-Array der Verarbeitungskammer gegenüber liegt.

10. Chip-Verpackungsvorrichtung nach einem der vorhergehenden Ansprüche 1 bis 9, **dadurch gekennzeichnet, dass** die Mittel, (22,72) die eine visuelle Einsicht in den ersten Hohlraum (18,68) schaffen, einen zweiten Hohlraum (22,72) umfassen, der ein Fenster bildet, das geeignet ist, um eine visuelle Einsicht zu schaffen, wobei der zweite Hohlraum (22,72) in der Außenfläche (17,67) des Gehäuseteils (14,64) gebildet ist.

11. Montageverfahren für eine Vielzahl von Chip-Verpackungsvorrichtungen nach einem der Ansprüche 1 bis 10 umfassend:
(a) bereitstellen einer Mehrzahl von Gehäuseteilen (14,64) und einer Mehrzahl von Befestigungsrahmen (31,81) an einer automatischen Montagelinie, wobei jedes der Gehäuseteile (14,64) einen Dichtungsrahmen (26,76) umfasst,
(b) bereitstellen einer Vielzahl von chip-förmigen Trägern (21), die je eine aktive Oberfläche (32) haben, an der Montagelinie,
(c) positionieren jedes chip-förmigen Trägers (21) innerhalb des Dichtungsrahmens (26,76) eines der Gehäuseteile (14,46) mittels eines ersten automatisierten Geräts (43),
(d) einsetzen jedes Befestigungsrahmens (31,81) in den Spalt (27,77) zwischen dem Dichtungsrahmen (26,76) und den geneigten Seitenflächen (24,74) des ersten Hohlraums (18,68) des Gehäuseteils (14,64) durch Drücken des Befestigungsrahmens (31,81) gegen das Gehäuseteil (14,64) bis die Bodenaußenfläche des Befestigungsrahmens (31, 81) eine Bodenfläche (23,73) des ersten Hohlraums (18,68) kontaktiert, wobei das Einsetzen und Drücken durch ein zweites automatisiertes Geräts (47) durchgeführt wird, und
(e) verbinden jedes Befestigungsrahmens (31,81) mit der Bodenfläche (23,73) des ersten Hohlraums (18,68) des Gehäuseteils (14,64).

12. Verfahren nach Anspruch 11, **dadurch gekennzeichnet, dass** jeder Befestigungsrahmen (31,81) mit einem der Gehäuseteile (14,64) durch einen Schweißprozeß verbunden wird.

13. Verfahren nach Anspruch 11, **dadurch gekennzeichnet, dass** jedes der Gehäuseteile (14,64) durch ein erstes Spritzgießverfahren mit einem ersten Kunststoffmaterial hergestellt ist und das Verbinden jedes Dichtungsrahmens (26,76) mit einem korrespondierenden Gehäuseteil (14,64) durch ein zweites Spritzgießverfahren mit einem zweiten Kunststoffmaterial durchgeführt wird.

14. Verfahren nach Anspruch 13 **dadurch gekennzeichnet, dass** das zweite Kunststoffmaterial weicher ist als das erste Kunststoffmaterial.

15. Verfahren nach Anspruch 11, **dadurch gekennzeichnet, dass** der Schweißprozeß zum Verbinden des eingesetzten Befestigungsrahmens (31,81) mit dem Gehäuseteil (14,64) ein Ultraschallschweißverfahren.

16. Verfahren nach Anspruch 11, **dadurch gekennzeichnet, dass** alle darin definierten Montageschritte voll automatisch mit bekannten, kommerziell erhältlichen Geräten ausgeführt werden.

17. Verfahren nach Anspruch 16, **dadurch gekennzeichnet, dass** die folgenden Schritte in einem Reinraum ausgeführt werden:
- positionieren jeden Trägers (21) in einem der Dichtungsrahmen (26,76),
- einsetzen jedes Befestigungsrahmens (31,81) in eine der Spalten (27,77), und
- schweißen jedes Befestigungsrahmens (31,81) auf eines der Gehäuseteile (14,64).

18. System zum Ausführen von Beurteilungs- und/oder Überprüfungs-Verfahren, die das elektro-optische Auslesen einer aktiven Oberfläche eines chip-förmigen Trägers einschließen, wobei das System umfasst:
(a) eine Verpackungsvorrichtung nach einem der Ansprüche 1 bis 10, und
(b) einen chip-förmigen Träger (21) mit einer aktiven Oberfläche, die geeignet und ausgebildet ist, um von einem elektro-optischen Lesegerät ausgelesen zu werden, wobei der chip-förmige Träger (21) in einem ersten Hohlraum (68,18) eines Gehäuseteils (64,14) der Verpackungsvorrichtung positioniert ist.

19. System nach Anspruch 18, wobei das System weiter Mittel (51) zum elektro-optischen Auslesen der aktiven Oberfläche des chip-förmigen Trägers (21) umfasst.

## Revendications

1. Dispositif de conditionnement d'un substrat en forme de puce comprenant une surface active qui est adaptée pour être lue par un dispositif de lecture électro-optique, ledit dispositif de conditionnement comprenant :
(a) une cartouche (62) comprenant une chambre de traitement (83) et une ouverture (63) pour introduire un échantillon de liquide dans ladite chambre de traitement (83), ladite cartouche (62) comprenant une partie de boîtier (64),
(b) ladite partie de boîtier (64) comprenant une surface intérieure (66) qui fait face à ladite chambre de traitement (83), et une surface extérieure (67), une première cavité (68) pour recevoir un substrat en forme de puce (21) et des moyens (72) pour fournir un accès visuel à ladite première cavité (68) et de ce fait à ladite surface active dudit substrat en forme de puce (21),
ladite première cavité (68) comprenant une surface inférieure (73) et des surfaces de paroi latérale inclinées (74) qui forment un angle obtus avec cette surface inférieure (73), et qui s'étendent entre ladite surface extérieure (67) de ladite partie de boîtier (64) et ladite surface inférieure (73),
(c) un cadre d'étanchéité (76) qui fait partie de ladite partie de boîtier (64) et qui est constitué d'une matière compressible, ledit cadre d'étanchéité (76) étant connecté à ladite surface inférieure (73) de ladite première cavité (68), et
(d) un cadre de verrouillage (81),
(e) la forme et les dimensions de ladite première cavité (68), dudit substrat en forme de puce (21), dudit cadre d'étanchéité (76) et dudit cadre de verrouillage (81) étant telles que :
(e1) ledit substrat en forme de puce (21) s'adapte dans l'espace délimité par ledit cadre d'étanchéité (76), et en ce qu'il existe un espace (77) entre ledit cadre d'étanchéité (76) et les surfaces de paroi latérale inclinées (74) de ladite première cavité (68),
(e2) ledit cadre de verrouillage (81) est plus grand que ledit espace (77), ledit cadre de verrouillage (81) pouvant cependant être inséré dans ledit espace (77) par une pression exercée sur ledit cadre de verrouillage (81) contre ladite partie de boîtier (64), ladite pression entraînant la compression dudit cadre d'étanchéité (76), et par une pression correspondante sur une partie substantielle de la surface extérieure de la périphérie latérale dudit substrat en forme de puce (21), ladite surface extérieure dudit substrat en forme de puce (21) étant en contact avec ledit cadre d'étanchéité (76).

2. Dispositif de conditionnement de puce selon la revendication 1, dans lequel ladite partie de boîtier (14, 64) et ledit cadre de verrouillage (31, 81) sont constitués d'une première matière plastique, et ledit cadre d'étanchéité (26, 76) est constitué d'une deuxième matière plastique, ladite deuxième matière plastique étant plus souple que ladite première matière plastique.

3. Dispositif de conditionnement de puce selon la revendication 2, dans lequel ladite première matière plastique est un polypropylène, et ladite deuxième matière plastique est un élastomère thermoplastique.

4. Dispositif de conditionnement de puce selon l'une quelconque des revendications 1 à 3 précédentes, dans lequel ledit cadre de verrouillage (31, 81) est apte à être fixé à ladite partie de boîtier (14, 64) par un procédé de soudage.

5. Dispositif de conditionnement de puce selon l'une quelconque des revendications 1 à 4 précédentes, dans lequel la section transversale dudit cadre de verrouillage (31, 81) est en forme de coin.

6. Dispositif de conditionnement de puce selon l'une quelconque des revendications 1 à 5 précédentes, dans lequel ledit cadre d'étanchéité (26, 76) est formé sur ladite surface inférieure (23, 73) par un procédé de moulage par injection.

7. Dispositif de conditionnement de puce selon l'une quelconque des revendications 1 à 6 précédentes, dans lequel ledit cadre d'étanchéité (26, 76) est fixé par adhérence à ladite surface inférieure (23, 73).

8. Dispositif de conditionnement de puce selon l'une quelconque des revendications 1 à 7 précédentes, dans lequel ledit substrat en forme de puce (21) est constitué de verre et présente une surface ayant sensiblement la forme d'un carré.

9. Dispositif de conditionnement de puce selon l'une quelconque des revendications 1 à 8 précédentes, dans lequel ledit substrat en forme de puce (21) comprend une première surface comportant un réseau de sondes (32), une deuxième surface opposée à ladite première surface, et une troisième surface qui s'étend entre lesdites première et deuxième surfaces, est normal à ces surfaces et forme la surface extérieure de la périphérie latérale dudit substrat (21), ledit substrat (21) étant positionné dans ladite première cavité (18, 68) de ladite partie de boîtier (14, 64) de telle sorte que ledit réseau de sondes soit situé en face de ladite chambre de traitement.

10. Dispositif de conditionnement de puce selon l'une quelconque des revendications 1 à 9 précédentes, dans lequel lesdits moyens (22, 72) qui fournissent un accès visuel à ladite première cavité (18, 68) comprennent une deuxième cavité (22, 72) qui forme une fenêtre adaptée pour offrir un accès visuel, ladite deuxième cavité (22, 72) étant formée dans ladite surface extérieure (17, 67) de ladite partie de boîtier (14, 64).

11. Procédé pour l'assemblage d'une pluralité de dispositifs de conditionnement de puce selon l'une quelconque des revendications 1 à 10, comprenant les étapes consistant à :
(a) placer une pluralité de parties de boîtier (14, 64) et une pluralité desdits cadres de verrouillage (31, 81) sur une ligne d'assemblage automatique, chacune desdites parties de boîtier (14, 64) comprenant un cadre d'étanchéité (26, 76) ;
(b) placer sur ladite ligne d'assemblage une pluralité de substrats en forme de puce (21) comprenant chacun une surface active (32) ;
(c) positionner chacun desdits substrats en forme de puce (21) à l'intérieur dudit cadre d'étanchéité (26, 76) de l'une desdites parties de boîtier (14, 64) au moyen d'un premier appareil automatique (43) ;
(d) insérer chacun desdits cadres de verrouillage (31, 81) dans ledit espace (27, 77) entre ledit cadre d'étanchéité (26, 76) et lesdites surfaces de paroi latérale inclinées (24, 74) de ladite première cavité (18, 68) de ladite partie de boîtier (14, 64) en pressant ledit cadre d'étanchéité (31, 81) contre ladite partie de boîtier (14, 64) jusqu'à ce que la surface extérieure inférieure dudit cadre de boîtier (31, 81) entre en contact avec une surface inférieure (23, 73) de ladite première cavité (18, 68), ces dernières opérations d'insertion et de pression étant réalisées par un deuxième appareil automatique (47) ; et
(e) fixer chacun desdits cadres de verrouillage (31, 81) sur ladite surface inférieure (23, 73) de ladite première cavité (18, 68) de ladite partie de boîtier (14, 64).

12. Procédé selon la revendication 11, dans lequel chacun desdits cadres de verrouillage (31, 81) est fixé à l'une desdites parties de boîtier (14, 64) par un procédé de soudage.

13. Procédé selon la revendication 11, dans lequel chacune desdites parties de boîtier (14, 64) est fabriquée par un premier procédé de moulage par injection avec une première matière plastique, et ladite fixation de chacun desdits cadres d'étanchéité (26, 76) à une partie de boîtier correspondante (14, 64) est réalisée par un deuxième procédé de moulage par injection avec une deuxième matière plastique.

14. Procédé selon la revendication 13, dans lequel ladite deuxième matière plastique est plus souple que ladite première matière plastique.

15. Procédé selon la revendication 11, dans lequel ledit procédé de soudage pour fixer ledit cadre de verrouillage inséré (31, 81) à ladite partie de boîtier (14, 64) est un procédé de soudage aux ultrasons.

16. Procédé selon la revendication 11, dans lequel toutes les étapes d'assemblage définies ici sont exécutées de façon entièrement automatique en utilisant un équipement disponible dans le commerce.

17. Procédé selon la revendication 16, dans lequel les étapes suivantes sont exécutées dans une salle blanche :
le positionnement de chacun desdits substrats (21) à l'intérieur de l'un desdits cadres d'étanchéité (26, 76) ;
l'insertion de chacun desdits cadres de verrouillage (31, 81) dans l'un desdits espaces (27, 77) ; et
le soudage de chacun desdits cadres de verrouillage (31, 81) à l'une desdites parties de boîtier (14, 64).

18. Système pour exécuter des procédés d'évaluation et/ou de surveillance impliquant une lecture électro-optique d'une surface active d'un substrat en forme de puce, ledit système comprenant :
(a) un dispositif de conditionnement selon l'une quelconque des revendications 1 à 10 ; et
(b) un substrat en forme de puce (21) comprenant une surface active qui est adaptée pour être lue par un dispositif de lecture électro-optique, ledit substrat en forme de puce (21) étant positionné dans ladite première cavité (68, 18) de ladite partie de boîtier (64, 14) dudit dispositif de conditionnement.

19. Système selon la revendication 18, ledit système comprenant en outre des moyens (51) pour lire de façon électro-optique ladite surface active dudit substrat en forme de puce (21).
